# EUROPEAN PATENT APPLICATION

(11) **EP 4 844 226 A1**
(43) Date of publication of application: **25.11.2026**
(21) Application number: 25177388.3
(22) Date of filing: 19.05.2025
(51) Int. Cl.: F03D 13/10, F03D 13/25, F03D 13/40

(54) **AN ARRANGEMENT FOR REDUCING GUST BUFFETING LOADS DURING INSTALLATION, TRANSPORT AND/OR STORAGE OF A PLURALITY OF TOWERS, A VESSEL, A STORAGE FACILITY, A METHOD AND AN APPARATUS**

(71) Applicant: Siemens Gamesa Renewable Energy A/S, 7330 Brande (DK)
(72) Inventor: Giusti, Alessandro, 7100 Vejle (DK); Hjorth-Nielsen, Anja, 8680 Ry (DK); Torrielli, Alessio, 8382 Hinnerup (DK)
(74) Representative: SGRE-Association

(57) **Abstract**

An arrangement for reducing gust buffeting loads during installation, transport and/or storage comprising a plurality of towers is provided. The plurality of towers is arranged in a layout of at least two lines of towers arranged adjacent to each other, wherein each line comprises at least one tower and one of the lines is displaced in respect to the other line, such that at least three towers have centers that form a triangular configuration.

Furthermore, a vessel for transporting the arrangement, a storage facility for storing the arrangement, a method for reducing gust buffeting loads during transport and/or storage and an apparatus for carrying the method is provided.

## Description

### FIELD

The present disclosure generally relates to a method for reducing gust buffeting loads during installation, transport and/or storage of a plurality of towers arranged in a mesh.

Furthermore, the disclosure generally relates to an installation arrangement, a vessel to transport the installation arrangement and a storage facility to storage the tower arrangement.

### BACKGROUND

During installation, transport or storage of a wind turbine, the gust buffeting can be the leading load case for strength design/verification of the foundation used at the quayside and potentially also the grillage of the installation vessel during the installation process of an offshore wind farm. Such a foundation is typically used to erect the towers at the so-called pre-assembly harbor, before their load out into the installation vessel. The usability of the foundation depends, among others, on the maximum expected base bending moment of the towers on it, and there could be situations, especially relevant for full tower installation, where gust buffeting loads are above the capacity of the foundation.

Over the years, it is known the use of different predetermined configurations for placing the towers during its transportation, such as a line of a number of towers or groups with a squared/rectangular mesh.

A typical disadvantage of such known rectangular or square configurations, may be, on the one hand, gust buffering induced loads on the towers are increased, and, on the other hand, to avoid this type of loading, longer distance for spacing between towers may be utilized, thereby complicating the crane operation due to the longer operative radius required to reach all tower positions and, in addition, bigger transportation vehicles may be needed or more travels may be required.

It is therefore a goal of the present disclosure to provide a method for reducing gust buffeting loads during transport and/or storage, which may overcome at least one of the above-mentioned disadvantages. In addition, an installation arrangement shall be provided, in which a plurality of towers will be placed during storage and/or transport.

### SUMMARY

An object of the disclosure may be achieved by the independent claims. The dependent claims describe advantageous developments and modifications.

Gust buffeting describes the response of the structure against a turbulent wind flow, and it is comprised of two main components: a) the average response related to the mean velocity; b) the dynamic response due to the fluctuation of the velocity around the mean and possible resonances of the structure.

Installation within the context of the disclosure is referred to all the activities done at the quayside and on the installation vessel (or barge). Transport may include road and vessel transport of towers in vertical configuration. The term storage includes the storage of towers fully or partially assembled, as long as they are vertical.

In accordance with an aspect of the disclosure there is provided an arrangement for reducing gust buffeting loads during installation, transport and/or storage. The arrangement comprises a plurality of wind turbine towers, each wind turbine tower has an equivalent diameter (D). The plurality of towers is arranged in a layout, which comprises at least two lines of towers arranged adjacent to each other. Each line comprises at least one tower. One of the lines is displaced in respect to the other line, such that at least three of the plurality of towers have centers that form a triangular configuration. At least three towers are spaced at a center-to-center distance (a) and the center-to-center distance (a)and the equivalent diameter (D) satisfy a/D < 5.

By having a line displaced in respect to the other line of towers such that the center of the tower forms a triangular configuration, the base bending moment and base shear force due to gust buffeting is reduced. In addition, the gust buffeting loads may be reduced depending on the ratio a/D by having a line displaced in respect to another line.

In an example, the triangular configuration forms essentially an isosceles triangle.

Within the meaning of the invention an isosceles triangle configuration may include an equilateral triangle, meaning that at least two sides are of equal length. However. in some embodiments, only two sides are equal in length.

By having an isosceles triangular configuration, the gust buffeting loads can be reduced up to 10-15%, depending on the ratio a/D.

In an example, the triangular configuration forms essentially an acute isosceles triangle.

In an example, the triangular configuration forms essentially a right isosceles triangle.

In an example, the triangular configuration forms essentially an obtuse isosceles triangle.

In an example, the triangular configuration forms an irregular triangle.

By having a triangular configuration with the base longer or shorter than the height, the gust buffeting load may be reduced depending on the ratio a/D.

In an example, the center-to-center distance (a) and the equivalent diameter (D) satisfy a/D < 1.85, in particular satisfy 1 <a/D < 1.85, and further in particular satisfy 1.5 <a/D < 1.85.

By varying the ratio a/D, the reduction of the gust buffeting forces varies. Wind tunnel test have demonstrated that passing from a ratio a/D of 1.5 to 1.85 has a reduction of gust buffeting force of the 12-14%. In addition, it has been found that with a ratio of a/D <5, the gust buffeting loads are reduced significantly.

In an example, the layout comprises two or more lines of towers. Each line comprises at least one tower. A plurality of groups of towers comprises at least three adjacent towers selected from two adjacent lines are arranged in form a triangular configuration, such that satisfying a/D < 5.

In another aspect, a vessel for transporting the arrangement is provided. The vessel comprises a deck, holding means to securely affix the tower to the deck during transportation, and the arrangement. The holding means may be e.g. grillage, sea fastening systems, lashings and straps, clamping devices, bolted connections, transport saddles, wires, cross-bracing with steel rods or cables, container frames, transport frames, skids and rollers or anti-slip mats.

By having the plurality of towers arranged on the deck according to the arrangement, with a line displaced in respect to the other line of towers such that the center of the tower forms a triangular configuration, the base bending moment and base shear force due gust buffeting is reduced during installation or transportation, e.g**.** including towers standing on the jacked-up vessel.

In another aspect, a storage facility for storing the arrangement is provided. The storage facility in a designated place such as sheltered bays, quaysides, or laydown areas, comprises storage racks or platforms configured to firmly secure the towers, and the arrangement mentioned above.

When the storage facility is outdoors, such as a sheltered bays, quaysides, or laydown areas, the base bending moment and base shear force due gust buffeting is reduced during storage by having the towers according to the arrangement, thus by having the center of the towers forming a shifted triangular configuration.

In a further aspect, a method for reducing gust buffeting loads during installation, transport and/or storage is provided. The method comprising the steps:
- providing a plurality of towers, each having an equivalent diameter (D),
- supporting the towers using at least two racks, each rack securing a respective tower at a designated position within a layout, each rack comprising a line of the layout,
- arranging the towers such that the centers of at least three of the plurality of towers define a predetermined triangular configuration, and
- spacing the towers at a center-to-center distance (a) within the layout, wherein a/D < 5.

In a further aspect, an apparatus for carrying out the method for reducing gust buffeting loads during installation, transport and/or storage is provided. The apparatus comprises at least two racks, each rack being configured to securely hold the plurality of towers in a designated position and a crane system that has one or more cranes and associated handling devices, which are configured to lift, move, and position the towers into the racks. The towers are positioned by the crane system in a layout. The layout is such that the centers of at least three of the towers form a triangular configuration and are spaced apart at a center-to-center distance (a) such that the ratio a/D is less than 5.

By having positioned the towers in the layout, it is allowed to not significantly change the operative radius of the crane, therefore a bigger crane is not needed since the radius is optimized.

In an example, at least one of the racks is configured to be movable with respect to the other rack, such that the at least one rack is moved in order to form the layout.

By having a plurality of towers contained in one rack, is easier to move all the towers together and keep the distance between them. Once one of the racks is moved, at least three towers will have a triangular configuration and spaced apart at a center-to-center distance (a) such that the ratio a/D is less than 5.

In an example, the at least one rack may comprise movable means. In particular, the movable means is at least one or any combination of: hydraulic rollers, skates, motorized platforms, rail and bogie system, winch and pulley system or low friction mat.

The movable means will help to move the rack, by sliding the rack with less external force.

Advantageous configurations and embodiments of the method according to the disclosure follow from the claims dependent on claim 1, as well as the following description. The advantageous features and examples of the arrangement, the vessel, the storage facility, the apparatus and the method for reducing gust buffeting loads during transport and/or storage can be combined unless statements to the contrary.

### BRIEF DESCRIPTION OF THE DRAWINGS

Embodiments of the disclosure are now described, by way of example only, with reference to the accompanying drawings, of which:
Fig. 1a and 1b shows an arrangement of a plurality of wind turbine towers; and
Fig. 2a and 2b shows an arrangement of a plurality of wind turbine towers; and
Fig. 3 shows a vessel for transportation an arrangement of a plurality of wind turbine towers.
Fig. 4a and 4b shows two racks.

The illustration in the drawings is in schematic form. It is noted that in different figures, similar or identical elements may be provided with the same reference signs.

### DESCRIPTION OF THE DRAWINGS

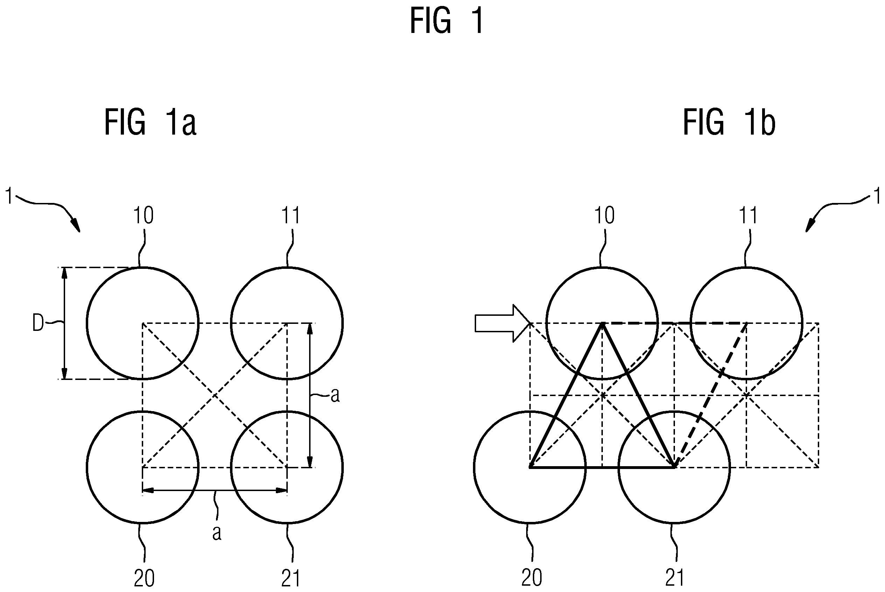

Fig. 1a shows an arrangement (1) of a plurality of wind turbine towers (10, 11, 20, 21). The towers (10, 11, 20, 21) have an equivalent diameter (D). The towers (10, 11, 20, 21) are arranged in a layout and are arranged adjacent to each other and spaced at a center-to-center distance (a). The towers may be fully or partially assembled (not shown), thus the tower may refer to the complete tower or a portion of the tower e.g**.** just a section.

Fig. 1b shows an arrangement (1) of a plurality of wind turbine towers (10, 11, 20, 21), one row of towers (10, 11) is displaced with respect to the adjacent row of towers (20, 21), as shown by the arrow, such that the centers of the three towers (10, 20, 21) form a triangular configuration (continue line) and the centers of the three towers (10, 11, 21) forms a triangular configuration accordingly (dash line). The triangular configuration may be an isosceles triangle, an acute isosceles triangle, a right isosceles triangle, an obtuse isosceles triangle or an irregular triangle.

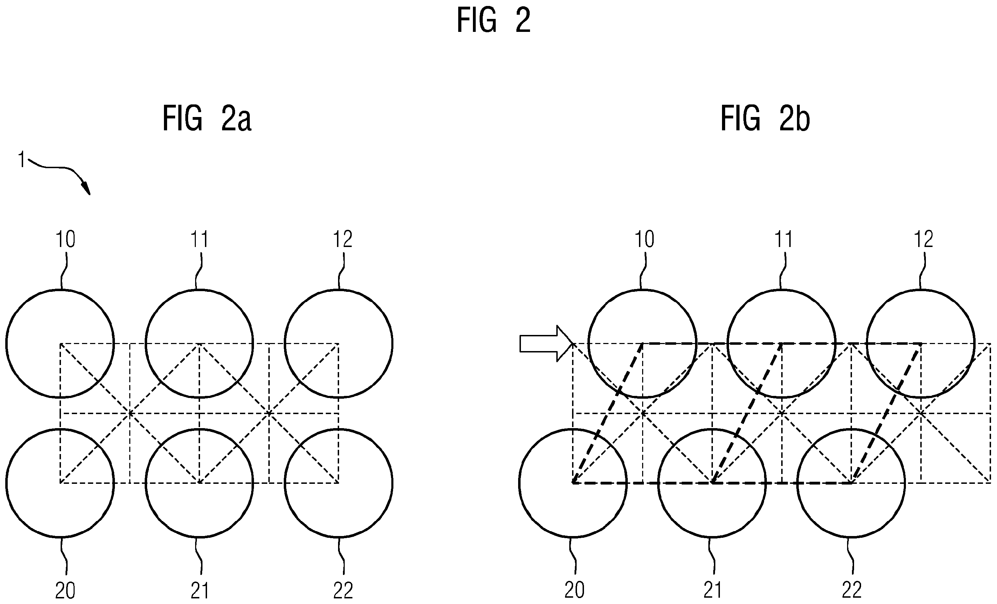

Fig. 2a shows an arrangement (1) of a plurality of wind turbine towers (10, 11, 12, 20, 21, 22). The towers (10, 11, 12, 20, 21, 22) are arranged in a layout and are arranged adjacent to each other as in Fig. 1a.

Fig. 2b shows an arrangement (1) of a plurality of wind turbine towers (10, 11, 12, 20, 21, 22), one row of towers (10, 11, 12) is displaced with respect to the adjacent row of towers (20, 21, 22), as shown by the arrow. The three towers (10, 20, 21), (10, 11, 21), (11, 21, 22) and (11, 12, 22) forms a triangular configuration, respectively.

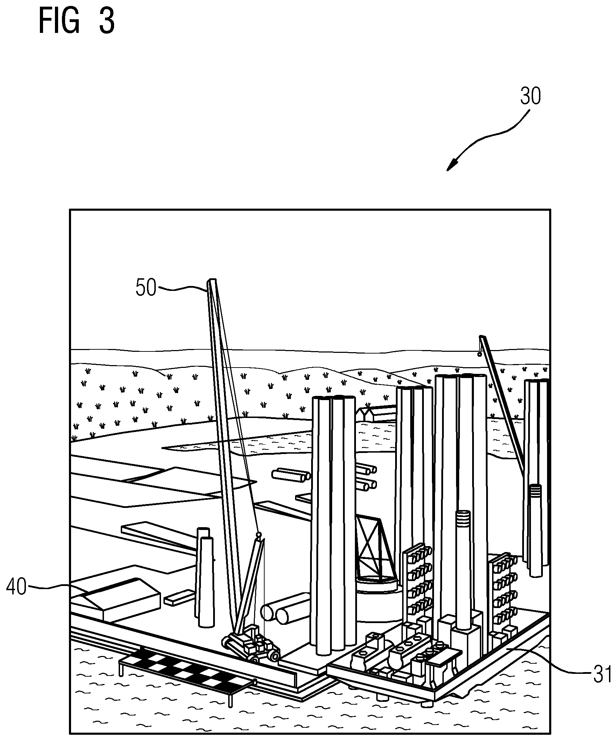

Fig. 3 shows a vessel (30) for transporting the arrangement (1) of the plurality of wind turbine towers. The arrangement (1) is placed on the deck (31) of the vessel (30) and is securely fixed with holding means during transportation.

In addition, a storage facility (40) is shown. The storage facility (40) stores the arrangement (1) in a designated place such as sheltered bays, quaysides, or laydown areas (not shown). The storage facility (40) has racks or platforms (not shown) configured to firmly secure the plurality of towers.

Furthermore, a crane system (50) is shown. The crane system (50) has one crane and associated handling devices that are configured to lift, move and position the plurality of towers into the racks.

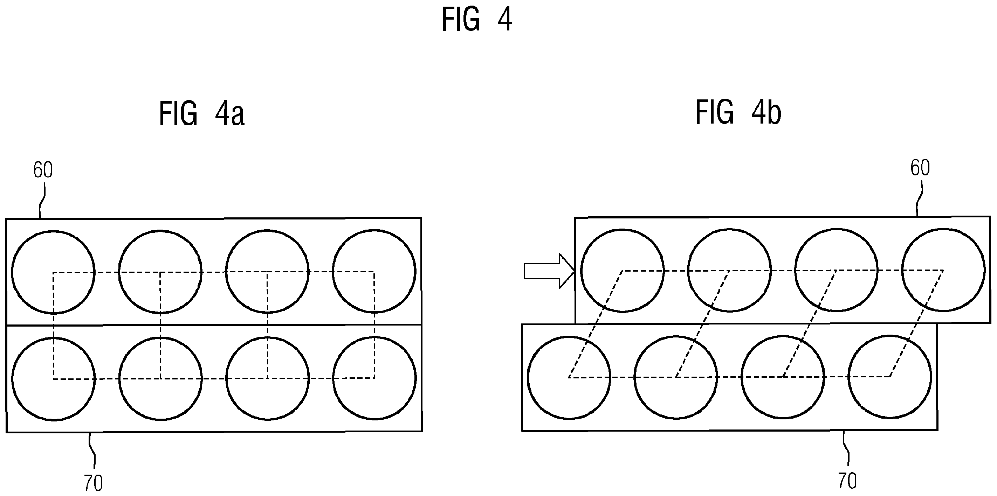

Fig. 4a shows two racks (60, 70), each one securing a line of four towers in a designated position within the layout. The racks (60, 70) represent a line of the layout. The racks may secure at least two towers.

The Fig.4b shows the rack (60) displaced in respect to the rack (70), thus the centers of at least three towers define a predetermined triangular configuration. The original square or rectangular mesh formed by the at least three towers it is transformed to a parallelogram mesh after the rack (60) is displaced.

Although the present disclosure has been described in detail with reference to the preferred embodiment, it is to be understood that the present disclosure is not limited by the disclosed examples, and that numerous additional modifications and variations could be made thereto by a person skilled in the art without departing from the scope of the disclosure.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. An arrangement (1) for reducing gust buffeting loads during installation, transport and/or storage, the arrangement comprising:
a plurality of wind turbine towers (10, 11, 20, 21), each wind turbine tower having an equivalent diameter (D), the plurality of towers (10, 11, 20, 21) arranged in a layout,
wherein the layout comprises:
at least two lines of towers arranged adjacent to each other, wherein each line comprises at least one tower, and
wherein one of the lines is displaced in respect to the other line, such that at least three of the plurality of towers (10, 11, 20, 21) have centers that form a triangular configuration, wherein the at least three towers are spaced at a center-to-center distance (a), and
wherein the center-to-center distance (a) and the equivalent diameter (D), satisfy: a/D < 5.

2. The arrangement (1) of claim 1, wherein the triangular configuration forms essentially an isosceles triangle.

3. The arrangement (1) of any one of claims 1 or 2, wherein the triangular configuration forms essentially an acute isosceles triangle.

4. The arrangement (1) of any one of claims 1 or 2, wherein the triangular configuration forms essentially a right isosceles triangle.

5. The arrangement (1) of any one of claims 1 or 2, wherein the triangular configuration forms essentially an obtuse isosceles triangle.

6. The arrangement (1) according to claim 1, wherein the triangular configuration forms an irregular triangle.

7. The arrangement (1) of any one of claims 1 to 6, wherein the center-to-center distance (a) and the equivalent diameter (D), satisfy: a/D < 1.85, in particular satisfy: 1 <a/D < 1.85, and further in particular satisfy: 1.5 <a/D < 1.85.

8. The arrangement (1) of anyone of previous claim 1 to 7, wherein the layout comprises:
two or more lines of towers, wherein each line comprises at least one tower, and
wherein a plurality of groups comprising at least three adjacent towers selected from two adjacent lines are arranged in form a triangular configuration, such that satisfying a/D < 5.

9. A vessel (30) for transporting the arrangement (1) of claim 1, wherein the vessel (30) comprises:
a deck (31),
holding means to securely affix the tower to the deck (31) during transportation,
the arrangement according to any one of claims 1 to 8.

10. A storage facility (40) for storing the arrangement (1) of claim 1, in a designated place such as sheltered bays, quaysides, or laydown areas, the storage facility (40) comprising:
storage racks or platforms configured to firmly secure the towers (10, 11, 20, 21),
the arrangement (10) according to any one of claims 1 to 8.

11. A method for reducing gust buffeting loads during installation, transport and/or storage, comprising:
providing a plurality of towers (10, 11, 20, 21), each having an equivalent diameter (D),
supporting the towers (10, 11, 20, 21) using at least two racks (60, 70), each rack (60, 70) securing a respective tower at a designated position within a layout, each rack (60, 70) comprising a line of the layout, and
arranging the towers such that the centers of at least three of the plurality of towers (10, 11, 20, 21) define a predetermined triangular configuration; and
spacing the towers (10, 11, 20, 21) at a center-to-center distance (a) within the layout, wherein a/D < 5.

12. An apparatus for carrying out the method for reducing gust buffeting loads during installation, transport and/or storage of claim 11, the apparatus comprising:
at least two racks (60, 70), each being configured to securely hold a plurality of towers (10, 11, 20, 21) in a designated position,
and
a crane system (50), comprising one or more cranes and associated handling devices, configured to lift, move, and position the towers (10, 11, 20, 21) into the racks (60, 70),
wherein the racks (60, 70) define a layout,
wherein the layout is such that the centers of at least three of the towers (10, 11, 20, 21) form a triangular configuration, and wherein the at least three towers (10,11,20,21) are spaced apart at a center-to-center distance (a) such that the ratio a/D is less than 5.

13. An apparatus according to claim 12, wherein at least one of the racks (60) is configured to be movable with respect to the other rack (70), such that the at least one rack (60) is moved in order to form the layout.

14. An apparatus according to claim 13, wherein at least one rack (60, 70) comprises movable means, in particular wherein the movable means is at least one or any combination of:
hydraulic rollers, skates, motorized platforms, rail and bogie system, winch and pulley system or low friction mat.
